# EUROPEAN PATENT APPLICATION

(11) **EP 4 174 655 A1**
(43) Date of publication of application: **03.05.2023**
(21) Application number: 21833307.8
(22) Date of filing: 30.06.2021
(51) Int. Cl.: G06F 9/54

(54) **APPLICATION PROGRAM INTERFACE CALLING METHOD AND DEVICE, STORAGE MEDIUM, AND ELECTRONIC DEVICE**

(30) Priority: 30.06.2020 CN 202010615384
(71) Applicant: ZTE Corporation, Shenzhen, Guangdong 518057 (CN)
(72) Inventor: LONG, Hui, Shenzhen, Guangdong 518057 (CN); CHEN, Jian, Shenzhen, Guangdong 518057 (CN); LIU, Yu, Shenzhen, Guangdong 518057 (CN); WANG, Bin, Shenzhen, Guangdong 518057 (CN)
(74) Representative: Chimini, Francesco
(86) International application number: PCT/CN2021/103590
(87) International publication number: WO 2022/002141

(57) **Abstract**

Provided are a method and device for calling an application program interface, a storage medium and an electronic device. The method includes: acquiring a first application program interface (API) call request sent by a target application, wherein the first API call request is used for requesting to call a first API, and the first API call request carries a first user identifier; acquiring a first data range of the first API pre-subscribed by the first user identifier, wherein the first data range of the first API includes a first target dimension under the first API and a target parameter under the first target dimension; acquiring first API return data corresponding to the first data range of the first API; and sending the first API return data to the target application. By means of the embodiments of the present invention, the problem of not implementing the dynamic control of the API return data can be solved, and a dynamic control effect on the API return data is achieved.

## Description

### Cross-Reference to Related Application

The present disclosure claims the priority of Chinese Patent Application 202010615384.3, filed on June 30, 2020, and entitled "Method and Device for Calling Application Program Interface, Storage Medium and Electronic Device", the entire contents of which are herein incorporated by reference.

### Technical Field

Embodiments of the present invention relate to the field of communications, and in particular, to a method and device for calling an application program interface, a storage medium and an electronic device.

### Background

In the related art, for a capability API, the range of API return data cannot be dynamically controlled. At present, only static control may be performed on the API return data, that is, different APIs are defined for different data ranges, and a caller acquires data of different ranges by means of calling different APls.

That is, dynamic control of the API return data is not implemented in the related art.

### Summary

Embodiments of the present invention provide a method and device for calling an application program interface, a storage medium, and an electronic device, so as to at least solve the problem in the related art that dynamic control of API return data is not implemented.

According to the embodiments of the present invention, a method for calling an application program interface is provided, including: acquiring a first application program interface (API) call request sent by a target application, wherein the first API call request is used for requesting to call a first API, and the first API call request carries a first user identifier; acquiring a first data range of the first API pre-subscribed by the first user identifier, wherein the first data range of the first API includes a first target dimension under the first API and a target parameter under the first target dimension; acquiring first API return data corresponding to the first data range of the first API; and sending the first API return data to the target application.

According to the embodiments of the present invention, a device for calling an application program interface is further provided, including: a first acquisition unit, configured to acquire a first application program interface (API) call request sent by a target application, wherein the first API call request is used for requesting to call a first API, and the first API call request carries a first user identifier; a second acquisition unit, configured to acquire a first data range of the first API pre-subscribed by the first user identifier, wherein the first data range of the firstAPI includes a first target dimension under the first API and a target parameter under the first target dimension; a third acquisition unit, configured to acquire first API return data corresponding to the first data range of the first API; and a first sending unit, configured to send the first API return data to the target application.

According to another embodiment of the present invention, a computer-readable storage medium is further provided, a computer program is stored in the computer-readable storage medium, wherein the computer program is configured to execute the steps in any one of the foregoing method embodiments.

According to another embodiment of the present invention, an electronic device is further provided, including a memory and a processor, wherein a computer program is stored in the memory, and the processor is configured to run the computer program, so as to execute the steps in any one of the foregoing method embodiments.

By means of the embodiments of the present invention, after the first application program interface (API) call request is received, the first data range can be determined according to the first user identifier in the request, and then the first API return data is returned, so that the subscribed data can be dynamically determined according to the first user identifier, therefore the problem of not implementing the dynamic control of the API return data can be solved, and a dynamic control effect on the API return data is achieved.

### Brief Description of the Drawings

Fig. 1 is a schematic diagram of an application terminal of a method for calling an application program interface according to an embodiment of the present invention;
Fig. 2 is a flow diagram of a method for calling an application program interface according to an embodiment of the present invention;
Fig. 3 is a module interaction diagram of a method for calling an application program interface according to an embodiment of the present invention;
Fig. 4 is a schematic flow diagram of a method for calling an application program interface according to an embodiment of the present invention;
Fig. 5 is a schematic diagram of a display interface of a method for calling an application program interface according to an embodiment of the present invention;
Fig. 6 is a schematic flow diagram of a method for calling an application program interface according to an embodiment of the present invention;
Fig. 7 is a schematic diagram of a display interface of a method for calling an application program interface according to an embodiment of the present invention; and
Fig. 8 is a structural diagram of a device for calling an application program interface according to an embodiment of the present invention.

### Detailed Description of the Embodiments

Embodiments of the present invention will be described in detail hereinafter with reference to the drawings and in combination with embodiments.

It should be noted that, the terms "first", "second" and the like in the specification, claims and the drawings of the embodiments of the present invention are used for distinguishing similar objects, and do not need to be used for describing a specific order or sequence.

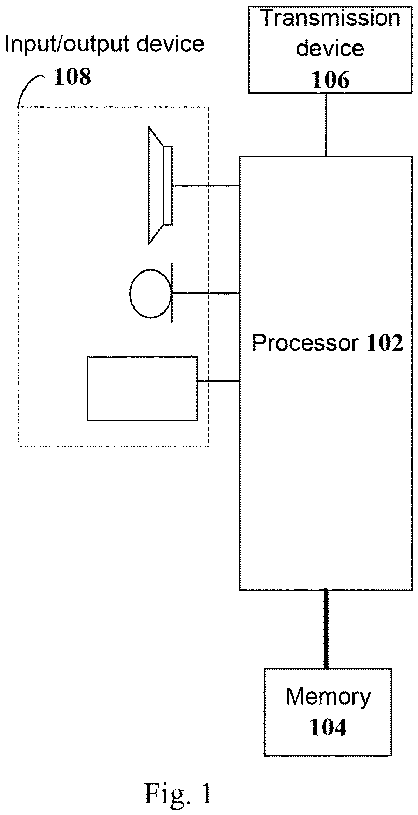

The method embodiment provided in the embodiments of the present application may be executed in a mobile terminal, a computer terminal, or a similar computing device. With running on a mobile terminal as an example, Fig. 1 is a block diagram of a hardware structure of a mobile terminal of a method for calling an application program interface according to an embodiment of the present invention. As shown in Fig. 1, the mobile terminal may include one or more (only one is shown in Fig. 1) processors 102 (the processor 102 may include, but is not limited to, processing devices such as a micro-programmed control unit (MCU) or a field-programmable gate array (FPGA)) and a memory 104 for storing data, wherein the mobile terminal may further include a transmission device 106 for a communication function and an input/output device 108. It can be understood by those ordinary skilled in the art that, the structure shown in Fig. 1 is only schematic, and does not limit the structure of the mobile terminal. For example, the mobile terminal may also include more or fewer components than shown in Fig. 1, or have a different configuration as shown in Fig. 1.

The memory 104 may be used for storing a computer program, for example, a software program and a module of application software, for example, a computer program corresponding to the method for calling the application program interface in the embodiments of the present invention, and the processor 102 executes various functional applications and data processing by means of running the computer program stored in the memory 104, that is, implements the method for calling the application program interface. The memory 104 may include a high-speed random access memory, and may further include a non-volatile memory, such as one or more magnetic storage devices, a flash memory, or other non-volatile solid state memories. In some instances, the memory 104 may further include memories that are arranged remotely relative to the processor 102, and these remote memories may be connected to the mobile terminal by means of a network. Instances of the network include, but are not limited to, the Internet, an intranet, a local area network, a mobile communication network, and combinations thereof.

The transmission device 106 is used for receiving or sending data by means of a network. A specific instance of the network may include a wireless network provided by a communication provider of the mobile terminal. In one instance, the transmission device 106 includes a network interface controller (Network Interface Controller, NIC for short), which may be connected with other network devices by means of a base station, so as to communicate with the Internet. In one instance, the transmission device 106 may be a radio frequency (Radio Frequency, RF for short) module, which is used for communicating with the Internet in a wireless manner.

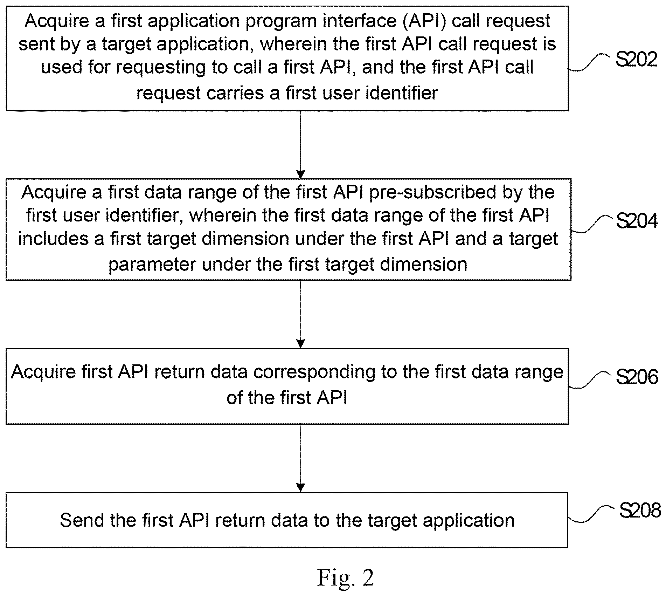

The present embodiment provides a method for calling an application program interface. Fig. 2 is a flow diagram of a method for calling an application program interface according to an embodiment of the present invention, and as shown in Fig. 2, the process includes the following steps:
Step S202, acquiring a first application program interface (API) call request sent by a target application, wherein the first API call request is used for requesting to call a first API, and the first API call request carries a first user identifier;
step S204, acquiring a first data range of the first API pre-subscribed by the first user identifier, wherein the first data range of the first API includes a first target dimension under the first API and a target parameter under the first target dimension;
step S206, acquiring first API return data corresponding to the first data range of the first API; and
step S208, sending the first API return data to the target application.

The step of acquiring the first API return data corresponding to the first data range of the first API includes: when the first target dimension includes a plurality of dimensions, acquiring API return data corresponding to the target parameter under each dimension among the plurality of dimensions, so as to obtain a plurality of pieces of API return data, wherein the first API return data includes the plurality of pieces of API return data.

The step of acquiring the first API return data corresponding to the first data range of the first API includes: when the target parameter under the first target dimension includes a plurality of parameters, acquiring API return data corresponding to each parameter among the plurality of parameters under the first target dimension, so as to obtain a plurality of pieces of API return data, wherein the first API return data includes the plurality of pieces of API return data.

The step of acquiring the first API return data corresponding to the first data range of the first API includes: acquiring API return data, which is obtained by a first API service provided by the first API under the target parameter of the first target dimension, wherein the first API return data includes the acquired API return data.

Before the step of acquiring the first application program interface (API) call request sent by the target application, the method further includes: acquiring a first subscription request of the first user identifier, wherein the first subscription request is used for requesting to subscribe the first data range of the first API; and recording the first data range subscribed by the first user identifier.

The method further includes: when the data range of the first API pre-subscribed by the first user identifier changes from the first data range into a second data range, acquiring a second API call request sent by the target application, wherein the second API call request is used for requesting to call the first API, and the second API call request carries the first user identifier; acquiring the second data range of the first API pre-subscribed by the first user identifier, wherein the second data range of the first API includes a second target dimension under the first API and a target parameter under the second target dimension; acquiring second API return data corresponding to the second data range of the first API; and sending the second API return data to the target application.

The step of acquiring the first application program interface (API) call request sent by the target application includes: acquiring the first API call request sent by the target application by means of a target API call code; and the step of acquiring the second API call request sent by the target application includes: acquiring the second API call request sent by the target application by means of the target API call code.

Before the step of acquiring the second API call request sent by the target application, the method further includes: acquiring a second subscription request of the first user identifier, wherein the second subscription request is used for requesting to change the data range of the first API subscribed by the first user identifier from the first data range into the second data range; and changing the data range of the first API subscribed by the recorded first user identifier from the first data range into the second data range.

Before the step of acquiring the first application program interface (API) call request sent by the target application, the method further includes: registering the first API, wherein the first API is allowed to be called after being registered; and recording a dimension that is allowed to be selected under the first API and a parameter that is allowed to be selected under the dimension that is allowed to be selected, wherein the dimension that is allowed to be selected includes the first target dimension, and the parameter that is allowed to be selected includes the target parameter.

The step of acquiring the first application program interface (API) call request sent by the target application includes: acquiring, on an API gateway, the first API call request sent by the target application; the step of acquiring the first data range of the first API pre-subscribed by the first user identifier includes: acquiring, on the API gateway, the first data range stored in an API subscription information storage sub-module; and the step of acquiring the first API return data corresponding to the first data range of the first API includes: adding, on the API gateway, the first data range as control information into the first API call request, so as to obtain a third API call request; sending, on the API gateway, the third API call request to an MEC capability providing module; and acquiring, on the API gateway, the first API return data sent by the MEC capability providing module, wherein the MEC capability providing module is used for querying the first API return data corresponding to the first data range.

By means of the above steps, after the first application program interface (API) call request is received, the first data range can be determined according to the first user identifier in the request, and then the first API return data is returned, so that the subscribed data can be dynamically determined according to the first user identifier, therefore the problem of not implementing the dynamic control of the API return data can be solved, and a dynamic control effect on the API return data is achieved.

The executive body of the foregoing steps may be a base station, a terminal, or the like, but is not limited thereto.

A description is given below in combination with specific examples.

In the embodiments of the present application, the first API return data is data, which is requested by the target application to call by means of the first application program interface (API) call request, and the target application provides services for a user by means of calling the first API return data.

A related MEC capability opening system generally utilizes a static control method for API data control, and defines different APIs for different data ranges, using different URLs to represent different data ranges. An API user acquires data of different ranges by means of purchasing different APIs. For example, for positioning data of a region A and a region B, two APIs need to be defined, for example, an API1 is defined, and the URL thereof is {apiroot}/location/v1/area/A, which represents the positioning data of the region A; and an API2 is defined, and the URL thereof is {apiroot}/location/v1/area/B, which represents the positioning data of the region B. The API user calls {apiroot}/location/v1/area/A to subscribe the data of the region A, and calls {apiroot}/location/v1/area/B to subscribe the data of the region B. This causes two problems, one is that the number of APIs is very large, and one API needs to be added every time a region is added; and the second problem is that the API user, that is the developer of an application (APP) program, must determine to call which API while writing codes. Assuming that an APP subscribing the data of the region A has been online, that is, {apiroot}/location/v1/area/A has been called in the codes, and if the API user further subscribes the data of the region B after being online, the APP must be offline, the codes are re-modified, the {apiroot}/location/v1/area/B is called, and then the APP is online, such that the APP development cost is increased.

In order to solve the above-mentioned problems, the embodiments of the present application propose the above method.

The control information is defined by the MEC capability opening API data in the form of key-value; the control information is stored in an API control information storage sub-module, and the user selects the range of the required control information when subscribing the API; and after sending the API call request, the APP program processes the control information by means of the API gateway, so as to realize dynamic control of the API data.

For different data control ranges, different APIs do not need to be defined, only one API needs to be defined, and the API user only needs to call this API in the codes. When the data range required by the API user changes, the API user only needs to perform re-subscription without modifying the codes, and the API may dynamically return the data of the current subscription range. In addition, by using the method provided in the embodiments of the present invention, multi-dimensional dynamic data control may also be implemented in the same API.

The data control method of the MEC capability opening API proposed in the embodiments of the present invention may be implemented by the following several modules: an API publishing module, an API control information storage sub-module, an API subscription information storage sub-module, an API gateway module, an API control information processing sub-module, and an MEC capability providing module.

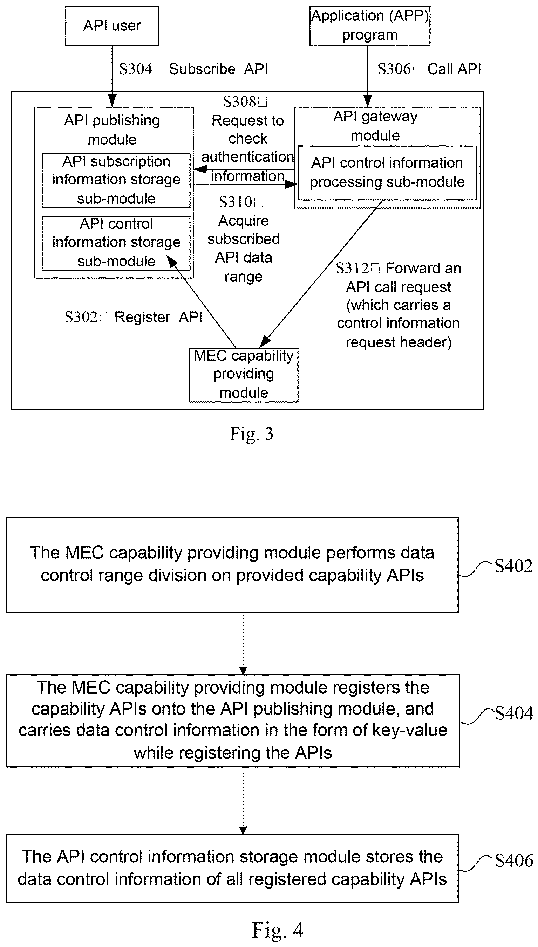

As shown in steps S302 to S312 in Fig. 3, the MEC capability providing module provides an implementation of a specific MEC capability API, for example, an implementation of a user location capability API. In order to control the API return data, the MEC capability providing module divides the provided API return data according to the control range, and returns different data for different control ranges. For example, the return data of the user location capability API may be controlled according to a region dimension, the region control dimension may be defined as area, and a dictionary value thereof may be defined for the area, for example, the region control dimension is defined as three regions A, B and C. For one API, a plurality of control dimensions may be defined, for example, the user location capability API may also define a period control dimension in addition to defining the area dimension control, and the dictionary value of the period dimension may be hour, day, month, etc. The control dimension and the dictionary value are collectively referred to as the control information of the API.

The MEC capability providing module registers the capability API onto the API publishing module. During the registration, the API control information is carried in the form of key-value, and the main purpose of registering the API is to provide an API caller with an URL address of an access entry. In a conventional mode, in order to control the data range returned by a visitor, different APIs need to be registered, for example, the above regions A, B and C and three times of hour, day and month, so the following six APIs need to be registered:
{apiroot}/location/v1/area/A;
{apiroot}/location/v1/area/B;
{apiroot}/location/v1/area/C;
{apiroot}/location/v1/period/hour;
{apiroot}/location/v1/period/day;
{apiroot}/location/v1/period/month.

In the embodiments of the present invention, when the API is registered, only one API is registered for different control information, for example, only one API is registered for the above control range:
{apiroot}/location/v1/zone.

In addition, the control information is sent to the API publishing module as additional information in the form of key-value. For example, the control information may be defined in the following manner:
area : A|B|C
period: hourldaylmonth.

Generally, the API publishing module only stores and displays the URL of the call entry of the API. In order to process the control information of the API, the API control information storage sub-module and the API subscription information storage sub-module are added on an API registration module in the embodiments of the present invention. The API control information storage sub-module does not need to understand the meaning of the control dimension and the dictionary value of the API, and only stores and displays the control information reported by the MEC capability providing module.

The API publishing module provides an API subscription function at the same time. In the conventional mode, the API user needs to subscribe different APIs to use data of different ranges, for example, if requiring the data of regions B and C, the API user needs to subscribe the following two APIs, and calls the two APIs in the codes of the APP program.
{apiroot}/location/v1/area/B;
{apiroot}/location/v1/area/C.

It is proposed in the embodiments of the present invention that, the API users use data of different ranges all subscribe the same API, and only call this API in the codes, for example, the following API:
{apiroot}/location/v1/zone.

The API user selects the data range that needs to be subscribed, and the data range is provided by the API control information storage sub-module.

The data range selected by the user is stored in the API subscription information storage sub-module. For example, if the user selects the data of the region B and the region C, the API subscription information storage sub-module stores the following information:
area : B|C.

The user may also select data ranges of a plurality of dimensions, for example, in addition to the region, the user may also select data of a time dimension "day", and at this time, the API subscription information storage sub-module stores the control information of all dimensions, for example:
area: B|C
period: day.

The API gateway module provides an entry and forwarding function of API call, and after receiving the API call request, the API gateway module forwards the request to the MEC capability providing module. In the embodiments of the present invention, the API control information processing sub-module is added on the API gateway, the control information, which is selected when the API caller subscribes the API, is queried from the API subscription information storage sub-module, and the control information is added into a request header according to a certain rule, and then is forwarded to the capability providing module.

After receiving the API request forwarded by the API gateway module, the capability providing module needs to parse the request header to acquire the control information therein. Since the control information itself is defined by the capability providing module, the capability providing module can return different data according to different control information.

When the API user needs to change the data range acquired by calling the API in the APP program, the API user only needs to re-subscribe the data range of the API without modifying the codes of the APP program, so as to implement the dynamic control of the API data.

The MEC capability opening may be divided into two stages: the first stage is an MEC capability API publishing stage, and the second stage is an API call stage. Specific implementation steps of the embodiments of the present invention in the two stages are described below.

In the first stage, the MEC capability publishing stage, as shown in Fig. 4:
S402, the MEC capability providing module performs data control range division on the provided capability. For example, the MEC capability providing module may provide a user location capability API. In order to control the data range of the location capability, the MEC capability providing module first defines the control dimension of the data, for example, performs control according to the area dimension, and then divides the data according to this control dimension. For example, area is divided into three regions A, B, and C. For different API callers, only the location data of the region A or the region B may be returned. For one API, a plurality of control dimensions may be defined, for example, the user location capability API may also define the a period dimension in addition to defining the area dimension for example, for example, divide the period dimension into hour, day, month, etc.

S404, the MEC capability providing module registers the capability API onto the API publishing module. When the API is registered, it is not need to register a plurality of APIs for the data of different control ranges, only one API needs to be registered, and the control range of the data is carried in an additional field. For example, when the user location capability API is registered, only one API needs to be registered as below:
{apiroot}/location/v1/zone.

The control ranges of the regions A, B and C are sent to the API registration module through additional fields. The mode of sending the control range may be in the form of key-value, key is a dimension to be controlled, value is the dictionary value of the control, and each dictionary value is segmented by using a separator. In addition, in order to display the control information on the API publishing module, it is also necessary to send the display information of the control dimension and the dictionary value to the API publishing module. For example, the control information sent by the user location capability API may be defined as: the key is "area", the value is "A|B|C", the key is displayed as "region selection", and the value is displayed as "region Alregion B|region C". The separator of value is pre-agreed by the MEC capability providing module and the API publishing module, for example, "I" may be used as the separator, and ", " may also be used as the separator. In the above example, "I" is used as the separator. If one API has a plurality of control dimensions, all of the plurality of control dimensions are sent to the API publishing module. For example, if the user location capability API further defines the control of the period dimension, the time control dimension may be defined as: the key is "period", the value is "hour|day|month", the key is displayed as "time selection", the value is displayed as "hour/day/month", and this control dimension is also sent to the API publishing module at the same time. Table 1 is an example of the control dimension and the dictionary value of one API.

**Table 1**

| API URL | key | key display | value | value display |
|---|---|---|---|---|
| {apiroot}/location/v1/zone | area | region selection | A\|B\|C | region A \| region B\|region C |
| {apiroot}/location/v1/zone | period | time selection | hour\|day\|month | hour\|day\|month |

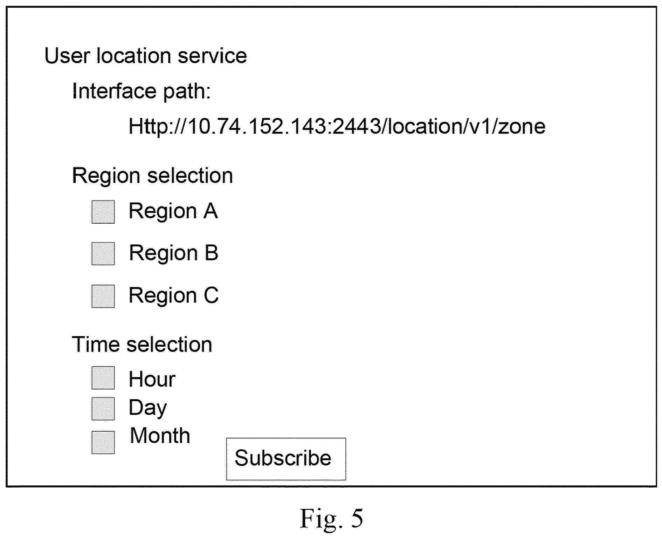

S406, the API control information storage sub-module stores and displays all API data control information, and the control information reported in Table 1 is stored in this module. The API publishing module reads the control information from the API control information storage sub-module and displays the control information. Fig. 5 provides an example of a display effect of a user location service API. In this example, after displaying the URL of the API, the user location service adds two control dimensions: "region selection" and "time selection", and the information displayed on the interface is the display information of key-value sent by the capability providing module.

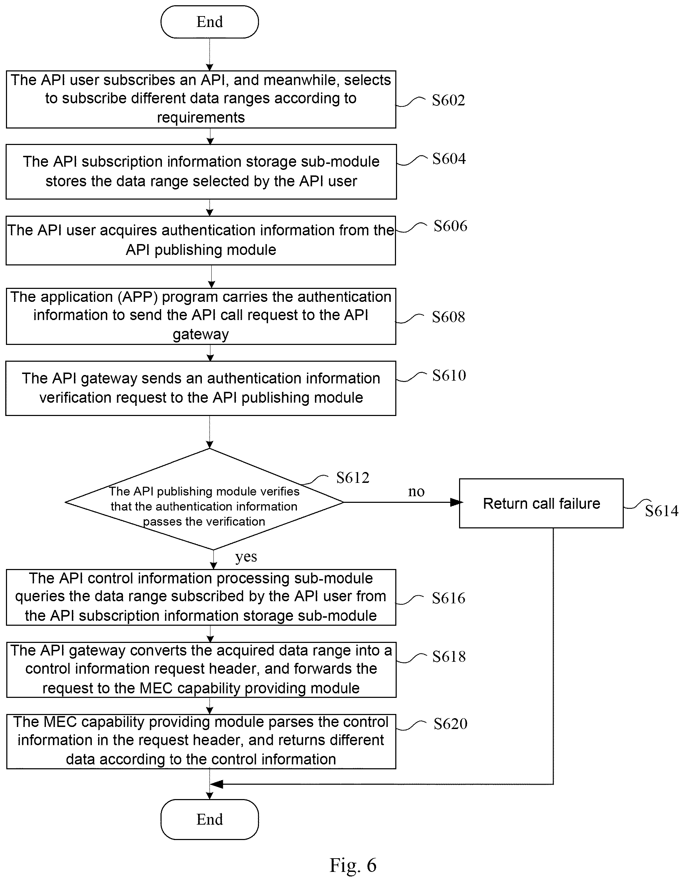

In the second stage, the API call stage, and the implementation steps refer to Fig. 6.

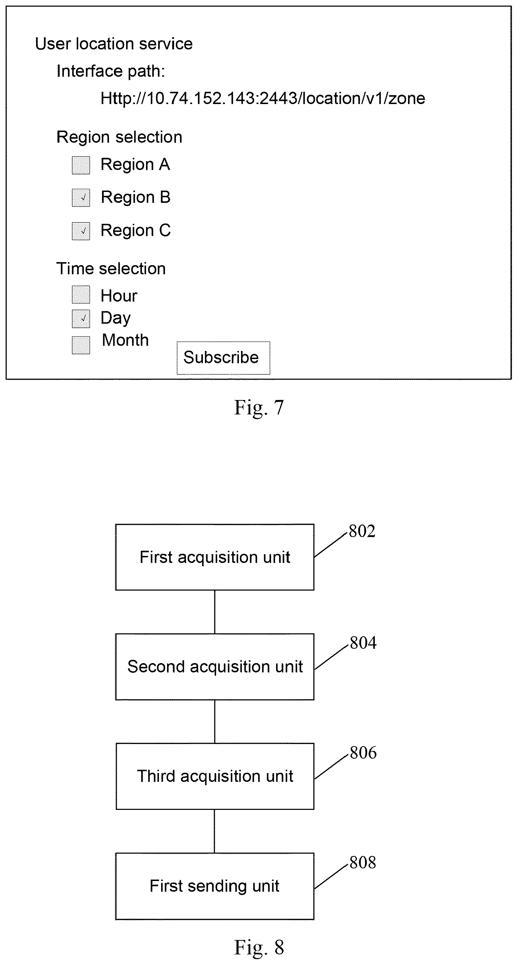

S602, the API user subscribes an API, for example, the user location capability API: {apiroot}/location/v1/zone, and selects data of different ranges according to requirements. Fig. 7 provides an example of subscription of a user location service. In this example, the API user selects the "region B " and "region C" in the region dimension and selects "day" in the time dimension.

S604, the API subscription information storage sub-module stores the data range selected by the API user, and the information stored in the present example is:
URL:{apiroot}/location/v1/zone
area : B|C
period: day.

S606, after the API user subscribed the API, the API obtains the authentication information for calling the API from the API publishing module, and the authentication information may be an APIKey, a user token, etc.

S608, the APP program developed by the API user carries the authentication information to send a call request to the API gateway, for example, sends a request to call the user location service API.

S610, after receiving the call request, the API gateway sends a verification request to the API publishing module to verify whether the authentication information is correct.

S612, the API publishing module verifies the authentication information and returns the result to the API gateway.

If the verification is not passed, S614 is executed, that is, returning a call failure message. If the call is passed, S616 is execute, that is, the API gateway sends the request to the API control information processing sub-module after receiving a return message indicating correctness of the authentication information verified by the API publishing module. The API control information processing sub-module queries the data range subscribed by the API user from the API subscription information storage sub-module. In this example, the information returned by the API subscription information storage sub-module is:
area: B|C
period: day.

S618, the API gateway adds the information returned by the API subscription information storage sub-module as control information into a request header. The naming rule of the header is defined according to an HTTP protocol, when the API gateway module adds the request header, the header name may be defined as an "x-control dimension key". In this example, the following request header may be added:
x-area: B/C
x-period: day
wherein, x-area refers to adding a prefix "x-" in front of the region control dimension area, "B|C" refers to the "region B " and the "region C", which are selected during the subscription of the API caller; and x-period refers to adding a prefix "x-" in front of the time control dimension period, and "day" refers to the "day" selected during the subscription of the API caller.

S620, after receiving the API request forwarded by the API gateway module, the MEC capability providing module needs to parse the "x-" request header carried by the gateway. In this example, the request header is "x-area" and "x-period", and after the prefix "x-" is stripped off, the capability providing module acquires key "area" and "period" of the control dimensions, and the values "B|C" and "day" of the two control dimensions. Since these keys-values are defined by the capability providing module, the capability providing module can return data according to these information, and in this example, area data of the region B and the region C and the time data "day" are returned.

By means of the above process, the return data of the API is automatically controlled by means of the API gateway. If the API user wants to change the API data range acquired in the APP program, the API user does not need to modify the codes of the APP program, and only needs to re-select the data subscription range, that is, performs selection in the first step, and then the data acquired by the APP can be dynamically changed.

By means of the descriptions of the above embodiments, those skilled in the art may clearly understand that, the method according to the above embodiments may be implemented by means of software plus a necessary universal hardware platform, and of course may also be implemented by hardware, but the former is better embodiment in many cases. Based on this understanding, the technical solutions of the present invention essentially or the part contributing to the prior art may be embodied in the form of a software product, the computer software product is stored in a storage medium (such as an ROM/RAM, a magnetic disk and an optical disk), and include a plurality of instructions for instructing a computer device (may be a mobile phone, a computer, a server, or a network device and the like) to execute the method in various embodiments of the present invention.

The present embodiment further provides a device for calling an application program interface, the device is used for implementing the foregoing embodiments and the preferred embodiments, and will not be repeated here. As used below, the term "module" may implement a combination of software and/or hardware of a predetermined function. Although the device described in the following embodiments is preferably implemented in software, implementations of hardware, or a combination of software and hardware are also possible and contemplated.

Fig. 8 is a structural block diagram of a device for calling an application program interface according to an embodiment of the present invention, and as shown in Fig. 8, the device includes:
a first acquiring unit 802, configured to acquire a first application program interface (API) call request sent by a target application, wherein the first API call request is used for requesting to call a first API, and the first API call request carries a first user identifier;
a second acquisition unit 804, configured to acquire a first data range of the first API pre-subscribed by the first user identifier, wherein the first data range of the firstAPI includes a first target dimension under the first API and a target parameter under the first target dimension;
a third acquisition unit 806, configured to acquire first API return data corresponding to the first data range of the first API; and
a first sending unit 808, configured to send the first API return data to the target application.

The third acquisition unit includes: a first acquisition module configured to acquire API return data corresponding to the target parameter under each dimension among the plurality of dimensions when the first target dimension includes a plurality of dimensions. So as to obtain a plurality of pieces of API return data, wherein the first API return data includes the plurality of pieces of API return data.

The third acquisition unit includes: a second acquisition module configured to, when the target parameter under the first target dimension includes a plurality of parameters, acquire API return data corresponding to each parameter among the plurality of parameters under the first target dimension, so as to obtain a plurality of pieces of API return data, wherein the first API return data includes the plurality of pieces of API return data.

The third acquisition unit includes: a third acquisition module, configured to acquire API return data, which is obtained by a first API service provided by the first API under the target parameter of the first target dimension, wherein the first API return data includes the acquired API return data.

The device further includes: a fourth acquisition unit configured to, before acquiring the first application program interface (API) call request sent by the target application, acquire a first subscription request of the first user identifier, wherein the first subscription request is used for requesting to subscribe the first data range of the first API; and a recording unit, configured to record the first data range subscribed by the first user identifier.

The device further includes: a fifth acquisition unit configured to, when the data range of the first API pre-subscribed by the first user identifier changes from the first data range into a second data range, acquire a second API call request sent by the target application, wherein the second API call request is used for requesting to call the first API, and the second API call request carries the first user identifier; a sixth acquisition unit, configured to acquire the second data range of the first API pre-subscribed by the first user identifier, wherein the second data range of the first API includes a second target dimension under the first API and a target parameter under the second target dimension; a seventh acquisition unit, configured to acquire second API return data corresponding to the second data range of the first API; and a second sending unit, configured to send the second API return data to the target application.

The first acquisition unit includes: a fourth acquisition module, configured to acquire the first API call request sent by the target application by means of a target API call code; and the fifth acquisition unit includes: a fifth acquisition module, configured to acquire the second API call request sent by the target application by means of the target API call code.

The device further includes: an eighth acquisition unit configured to, before acquiring the second API call request sent by the target application, acquire a second subscription request of the first user identifier, wherein the second subscription request is used for requesting to change the data range of the first API subscribed by the first user identifier from the first data range into the second data range; and a changing unit, configured to change the data range of the first API subscribed by the recorded first user identifier from the first data range into the second data range.

The device further includes: a registration unit configured to, before acquiring the first application program interface (API) call request sent by the target application, register the first API, wherein the first API is allowed to be called after being registered; and a recording unit, configured to record a dimension that is allowed to be selected under the first API and a parameter that is allowed to be selected under the dimension that is allowed to be selected, wherein the dimension that is allowed to be selected includes the first target dimension, and the parameter that is allowed to be selected includes the target parameter.

The first acquisition unit includes: a sixth acquisition module, configured to acquire, on an API gateway, the first API call request sent by the target application; the second acquisition unit includes: a seventh acquisition module, configured to acquire, on the API gateway, the first data range stored in an API subscription information storage sub-module; and the third acquisition unit includes: a processing module, configured to add, on the API gateway, the first data range as control information into the first API call request, so as to obtain a third API call request; send, on the API gateway, the third API call request to an MEC capability providing module; and acquire, on the API gateway, the first API return data sent by the MEC capability providing module, wherein the MEC capability providing module is used for querying the first API return data corresponding to the first data range.

By means of the above device, after the first application program interface (API) call request is received, the first data range can be determined according to the first user identifier in the request, and then the first API return data is returned, so that the subscribed data can be dynamically determined according to the first user identifier, therefore the problem of not implementing the dynamic control of the API return data can be solved, and a dynamic control effect on the API return data is achieved.

It should be noted that, the foregoing modules may be implemented by software or hardware, and for the latter, the foregoing modules may be implemented in the following manner, but are not limited thereto: the foregoing modules are all located in the same processor; or the foregoing modules are respectively located in different processors in the form of any combination.

The embodiments of the present invention further provide a computer-readable storage medium, a computer program is stored in the computer-readable storage medium, wherein the computer program is configured to execute the steps in any one of the foregoing method embodiments when running.

In an exemplary embodiment, the computer-readable storage medium may include, but is not limited to, various media capable of storing the computer program, such as a USB flash disk, a read-only memory (Read-Only Memory, ROM for short), a random access memory (Random Access Memory, RAM for short), a mobile hard disk, a magnetic disk, or an optical disk.

The embodiments of the present invention further provide an electronic device, including a memory and a processor, wherein a computer program is stored in the memory, and the processor is configured to run the computer program, so as to execute the steps in any one of the foregoing method embodiments.

In an exemplary embodiment, the electronic device may further include a transmission device and an input/output device, wherein the transmission device is connected with the processor, and the input/output device is connected with the processor.

For specific examples in the present embodiment, reference may be made to the examples described in the foregoing embodiments and exemplary embodiments, and thus details are not described herein again.

Obviously, it should be understood by those skilled in the art that, various modules or various steps of the embodiments of the present invention may be implemented by general computing devices, may be concentrated on a single computing device or distributed on a network composed of a plurality of computing devices, and may be implemented by program codes executable by the computing devices, such that the modules or steps may be stored in a storage device to be executed by the computing devices, and in some cases, the steps shown or described may be executed in an order different from that herein, or they are made into various integrated circuit modules respectively, or a plurality of modules or steps in the integrated circuit modules may be manufactured into a single integrated circuit module for implementation. In this way, the embodiments of the present invention are not limited to any specific hardware and software combination.

The foregoing descriptions are merely preferred embodiments of the present invention, and are not intended to limit the present application, and for those skilled in the art, the present application may have various modifications and changes. Any modifications, equivalent replacements, improvements and the like, made within the principles of the present application, shall fall within the protection scope of the present application.

### Industrial Applicability

In the embodiments of the present invention, after the first application program interface (API) call request is received, the first data range can be determined according to the first user identifier in the request, and then the first API return data is returned, so that the subscribed data can be dynamically determined according to the first user identifier, therefore the problem of not implementing the dynamic control of the API return data can be solved, and a dynamic control effect on the API return data is achieved.

## Claims

1. A method for calling an application program interface, comprising:
acquiring a first application program interface (API) call request sent by a target application, wherein the first API call request is used for requesting to call a first API, and the first API call request carries a first user identifier;
acquiring a first data range of the first API pre-subscribed by the first user identifier, wherein the first data range of the first API comprises a first target dimension under the first API and a target parameter under the first target dimension;
acquiring first API return data corresponding to the first data range of the first API; and
sending the first API return data to the target application.

2. The method according to claim 1, wherein the step of acquiring the first API return data corresponding to the first data range of the first API comprises:
when the first target dimension comprises a plurality of dimensions, acquiring API return data corresponding to the target parameter under each dimension among the plurality of dimensions, so as to obtain a plurality of pieces of API return data, wherein the first API return data comprises the plurality of pieces of API return data.

3. The method according to claim 1, wherein the step of acquiring the first API return data corresponding to the first data range of the first API comprises:
when the target parameter under the first target dimension comprises a plurality of parameters, acquiring API return data corresponding to each parameter among the plurality of parameters under the first target dimension, so as to obtain a plurality of pieces of API return data, wherein the first API return data comprises the plurality of pieces of API return data.

4. The method according to claim 1, wherein the step of acquiring the first API return data corresponding to the first data range of the first API comprises:
acquiring API return data, which is obtained by a first API service provided by the first API under the target parameter of the first target dimension, wherein the first API return data comprises the acquired API return data.

5. The method according to claim 1, wherein before the step of acquiring the first application program interface (API) call request sent by the target application, the method further comprises:
acquiring a first subscription request of the first user identifier, wherein the first subscription request is used for requesting to subscribe the first data range of the first API; and
recording the first data range subscribed by the first user identifier.

6. The method according to claim 1, wherein the method further comprises:
when the data range of the first API pre-subscribed by the first user identifier changes from the first data range into a second data range, acquiring a second API call request sent by the target application, wherein the second API call request is used for requesting to call the first API, and the second API call request carries the first user identifier;
acquiring the second data range of the first API pre-subscribed by the first user identifier, wherein the second data range of the first API comprises a second target dimension under the first API and a target parameter under the second target dimension;
acquiring second API return data corresponding to the second data range of the first API; and
sending the second API return data to the target application.

7. The method according to claim 6, wherein,
the step of acquiring the first application program interface (API) call request sent by the target application comprises: acquiring the first API call request sent by the target application by means of a target API call code; and
the step of acquiring the second API call request sent by the target application comprises: acquiring the second API call request sent by the target application by means of the target API call code.

8. The method according to claim 6, wherein before the step of acquiring the second API call request sent by the target application, the method further comprises:
acquiring a second subscription request of the first user identifier, wherein the second subscription request is used for requesting to change the data range of the first API subscribed by the first user identifier from the first data range into the second data range; and
changing the data range of the first API subscribed by the recorded first user identifier from the first data range into the second data range.

9. The method according to any one of claims 1-8, wherein before the step of acquiring the first application program interface (API) call request sent by the target application, the method further comprises:
registering the first API, wherein the first API is allowed to be called after being registered; and
recording a dimension that is allowed to be selected under the first API and a parameter that is allowed to be selected under the dimension that is allowed to be selected, wherein the dimension that is allowed to be selected comprises the first target dimension, and the parameter that is allowed to be selected comprises the target parameter.

10. The method according to any one of claims 1-8, wherein,
the step of acquiring the first application program interface (API) call request sent by the target application comprises: acquiring, on an API gateway, the first API call request sent by the target application;
the step of acquiring the first data range of the first API pre-subscribed by the first user identifier comprises: acquiring, on the API gateway, the first data range stored in an API subscription information storage sub-module; and
the step of acquiring the first API return data corresponding to the first data range of the first API comprises: adding, on the API gateway, the first data range as control information into the first API call request, so as to obtain a third API call request; sending, on the API gateway, the third API call request to an MEC capability providing module; and acquiring, on the API gateway, the first API return data sent by the MEC capability providing module, wherein the MEC capability providing module is used for querying the first API return data corresponding to the first data range.

11. A device for calling an application program interface, comprising:
a first acquisition unit, configured to acquire a first application program interface (API) call request sent by a target application, wherein the first API call request is used for requesting to call a first API, and the first API call request carries a first user identifier;
a second acquisition unit, configured to acquire a first data range of the first API pre-subscribed by the first user identifier, wherein the first data range of the first API comprises a first target dimension under the first API and a target parameter under the first target dimension;
a third acquisition unit, configured to acquire first API return data corresponding to the first data range of the first API; and
a first sending unit, configured to send the first API return data to the target application.

12. A computer-readable storage medium, wherein a computer program is stored in the computer-readable storage medium, and the computer program is configured to execute the method according to any one of claims 1-10 when running.

13. An electronic device, comprising a memory and a processor, wherein a computer program is stored in the memory, and the processor is configured to run the computer program, so as to execute the method according to any one of claims 1-10.
